(19) Europäisches Patentamt
European Patent Office
Office européen des brevets

(11) **EP 1 835 445 A2**

(12) **EUROPÄISCHE PATENTANMELDUNG**

(43) Veröffentlichungstag:
**19.09.2007 Patentblatt 2007/38**

(51) Int Cl.:
***G06K 9/68*** *(2006.01)*

(21) Anmeldenummer: **07102203.2**

(22) Anmeldetag: **13.02.2007**

(84) Benannte Vertragsstaaten:
**AT BE BG CH CY CZ DE DK EE ES FI FR GB GR HU IE IS IT LI LT LU LV MC NL PL PT RO SE SI SK TR**
Benannte Erstreckungsstaaten:
**AL BA HR MK YU**

(30) Priorität: **16.03.2006 DE 102006012475**

(71) Anmelder: **ROBERT BOSCH GMBH**
**70442 Stuttgart (DE)**

(72) Erfinder: **Withopf, Daniel**
**97953 Koenigsheim (DE)**

(54) **Vorrichtung, Verfahren und Computerprogramm zur Bewertung von Testobjekten**

(57) Die effektive Bewertung von Testobjekten anhand von vorgegebenen Bedingungen ist in vielen Bereichen der Datenverarbeitung eine ständige Herausforderung, zu der eine Vielzahl von Lösungsansätzen bislang erarbeitet wurden. Beispielsweise liegt im Bereich der digitalen Bildverarbeitung sehr oft die Aufgabenstellung vor, in Bildern oder Bildersequenzen ein Suchobjekt anhand vorgegebener Bedingungen zu lokalisieren.

Es wird eine Vorrichtung 1 zur Bewertung von Testobjekten 3, x mit einer Mehrzahl von Klassifikationseinrichtungen 6, 7, 8 zur Zwischenklassifikation der Testobjekte 3, x vorgeschlagen, wobei die Klassifikationseinrichtungen 6, 7, 8 programmtechnisch und/oder schaltungstechnisch ausgebildet sind, so dass die Klassifikationseinrichtungen 6, 7, 8 hintereinander geschaltet sind und/oder schaltbar sind und nur positiv zwischenklassifizierte Testobjekte 3, x von einer ersten Klassifikationseinrichtung 6, 7 zu einer zweiten Klassifikationseinrichtung 7, 8 weitergebbar sind und/oder weitergegeben werden, wobei ein positiv zwischenklassifiziertes Testobjekt 3, x zusammen mit einer Kenngröße auf Basis der Zwischenklassifikation von der ersten Klassifikationseinrichtung 6, 7 an die zweite Klassifikationseinrichtung 7, 8 übergeben wird.

Fig. 1

EP 1 835 445 A2

**Beschreibung**

Stand der Technik

Die Erfindung geht aus von einer Vorrichtung zur Bewertung von Testobjekten mit einer Mehrzahl von Klassifikationseinrichtungen zur Zwischenklassifikation der Testobjekte, wobei die Klassifikationseinrichtungen programmtechnisch und/oder schaltungstechnisch ausgebildet sind, so dass die Klassifikationseinrichtungen hintereinander geschaltet sind und/oder schaltbar sind und nur positiv zwischenklassifizierte Testobjekte von einer ersten Klassifikationseinrichtung zu einer zweiten Klassifikationseinrichtung weitergebbar sind und/oder weitergegeben werden, sowie einem entsprechenden Verfahren und einem entsprechenden Computerprogramm.

Die effektive Bewertung von Testobjekten anhand von vorgegebenen Bedingungen ist in vielen Bereichen der Datenverarbeitung eine ständige Herausforderung, zu der eine Vielzahl von Lösungsansätzen bislang erarbeitet wurden. Beispielsweise liegt im Bereich der digitalen Bildverarbeitung sehr oft die Aufgabenstellung vor, in Bildern oder Bildersequenzen ein Suchobjekt anhand vorgegebener Bedingungen zu lokalisieren.

In dem wissenschaftlichen Artikel von Paul Viola und Michael Jones: Rapid object detection using a boosted cascade of simple features. In Proc. IEEE Conf. Computer Vision Pattern Reognition, Cambridge, GB, 2001 wird ein entsprechendes Verfahren zur schnellen Detektion eines Suchobjekts in einem Bild beschrieben. Das offenbarte Verfahren weist nach Ansicht der Autoren drei wesentliche Bestandteile auf: Zum einen wird die Verwendung eines Integralbildes erläutert, welches eine kodierte Darstellung des Originalbilds und somit eine sehr effektive Anwendung von Merkmalen auf die Bildinformationen des Originalbildes ermöglicht. Zum zweiten wird ein Lernalgorithmus vorgeschlagenen, welcher die Konstruktion von effektiven Klassifikatoren auf Basis einer automatisierten Auswahl von relevanten Merkmalen erlaubt. Zum dritten wird vorgeschlagen, die Klassifikatoren in einer Kaskade anzuordnen, so dass ein Testobjekt, also z.B. ein Bildbereich eines zu untersuchenden Bildes, bei entsprechender hoher Bewertung bei der Anwendung der Merkmale der einzelnen Klassifikatoren, die Klassifikatoren in einer sequenziellen Folge durchläuft, also von Klassifikator zu Klassifikator weitergereicht wird, oder - falls die Bewertung nicht ausreichend ist - verworfen wird.

Offenbarung der Erfindung

Die Erfindung betrifft eine Vorrichtung zur Bewertung von Testobjekten mit den Merkmalen des Anspruchs 1, ein Verfahren zur Bewertung von Testobjekten mit den Merkmalen des Anspruchs 10 sowie ein Computerprogramm mit den Merkmalen des Anspruchs 11.

Die erfindungsgemäße Vorrichtung ist ausgebildet und/oder geeignet zur Bewertung, insbesondere Klassifikation, von Testobjekten. Die Testobjekte können prinzipiell beliebiger Art sein, vorzugsweise sind die Testobjekte als Bilder, zum Beispiel von einer Video- oder Digitalkamera, und/oder als Ausschnitte von derartigen Bildern und/oder als Repräsentationen, insbesondere als kodierte Äquivalente von Bildern oder Teilbereichen davon, ausgebildet. Bevorzugt sind die Testobjekte vorbearbeitet, insbesondere gefiltert.

Eine von der erfindungsgemäßen Vorrichtung umfasste Mehrzahl von Klassifikationseinrichtungen ist ausgebildet und/oder geeignet zur Zwischenklassifikation der Testobjekte. Eine und/oder jede einzelne der Klassifikationseinrichtungen umfasst ein oder mehrere Merkmale, wobei zur Zwischenklassifikation ein Zwischenklassifikationswert gebildet wird, der bevorzugt das Ergebnis der Anwendung von dem einem oder den mehreren Merkmalen auf das Testobjekt umfasst. Der Zwischenklassifikationswert entspricht bevorzugt dem Ergebnis einer mathematischen Verknüpfung des Merkmals oder der Merkmale mit dem Testobjekt. Die Merkmale sind im Allgemeinen beliebiger Art, bevorzugt sind die Merkmale jeweils als ein-, zwei- oder mehrdimensionales Feld, insbesondere Datenfeld ausgebildet.

Die Klassifikationseinrichtungen sind hintereinander geschaltet und/oder insbesondere während des Betriebes der Vorrichtung hintereinander schaltbar, so dass nur positiv zwischenklassifizierte Testobjekte von einer ersten Klassifikationseinrichtung zu einer zweiten Klassifikationseinrichtung weitergebbar sind und/oder weitergegeben werden. Somit sind die Klassifikationseinrichtungen vorzugsweise in Hinblick auf die Übergabe oder Weitergabe der Testobjekte in Reihe geschaltet und/oder schaltbar. Vorzugsweise werden Testobjekte mit negativer Zwischenklassifikation verworfen. Bevorzugt liegt ein positiv zwischenklassifiziertes Testobjekt vor, wenn der Betrag des Zwischenklassifikationswerts einen Grenzwert, insbesondere einen vorgegebenen und/oder festen Grenzwert, überschreitet.

Die Positionsangabe der ersten und der zweiten Klassifikationseinrichtung sind vorzugsweise als relative Positionsangaben zueinander zu verstehen, so dass die erste Klassifikationseinrichtung an einer beliebigen Position innerhalb der Reihe der Klassifikationseinrichtungen stehen kann und die zweite Klassifikationseinrichtung eine oder die nachfolgende Klassifikationseinrichtung in der Reihe bildet.

Erfindungsgemäß ist vorgesehen, dass die Vorrichtung programmtechnisch und/oder schaltungstechnisch ausgebildet ist, so dass von der ersten Klassifikationseinrichtung an die zweite Klassifikationseinrichtung ein positiv zwischenklassifiziertes Testobjekt zusammen mit einer insbesondere nicht-redundanten Kenngröße auf Basis des Zwischenklassifikationswertes übergeben wird. Nicht-redundant bedeutet vorzugsweise, dass die Kenngröße nicht bereits aus der Tatsache ableitbar ist, dass ein Testobjekt weitergereicht wird. Die Kenngröße ist dabei bevorzugt als Zwischenklassifikationswert und/oder als Objektwahrscheinlichkeit ausgebildet, also als Wahrscheinlichkeit, dass ein Suchobjekt in dem Testobjekt enthalten ist. Vorzugsweise ist die Kenngröße aus dem Zwischenklassifikationswert der ersten Klassifikationseinrichtung gebildet, alternativ ist die Kenngröße zusätzlich aus den Zwischenklassifikationswerten von allen in der Reihe vorhergehenden Klassifikationseinrichtungen oder einer beliebigen Teilmenge davon gebildet. Insbesondere ist die Kenngröße als Vektor und/oder als kumulierter Wert auf Basis der Zwischenklassifikationswerte der vorhergehenden Klassifikationseinrichtungen oder Teilmengen davon ausgebildet.

Die Erfindung geht dabei von der Überlegung aus, dass die zweite Klassifikationseinrichtung die übergebene Kenngröße zur Bewertung der eigenen Zwischenklassifikation verwendet, um somit die Qualität der eigenen Zwischenklassifikation zu verbessern. Damit vereinfacht sich die Aufgabe der zweiten und/oder der nachfolgenden Klassifikationseinrichtung, da sie einen bereits vorhandenen Zwischenklassifikationswert aus den vorhergehenden Klassifikationseinrichtungen nur noch verfeinern muss. Auf diese Weise kann die Bewertung von Testobjekten im Vergleich zum bekannten Stand der Technik entweder bei gleichem Aufwand mit höherer Qualität oder bei gleicher Qualität mit geringerem Aufwand durchgeführt werden.

Bei einer bevorzugten Ausführungsform der Erfindung sind die Klassifikationseinrichtungen in einer Baumstruktur und/oder einer Kaskade angeordnet und/oder anordnenbar und repräsentieren die Knoten in der jeweiligen Struktur. Insbesondere bildet die zweite Klassifikationseinrichtung den oder einen Nachfolgerknoten zu der ersten Klassifikationseinrichtung. Die Baumstruktur ist bevorzugt dadurch gekennzeichnet, dass auf einen ersten Knoten nachfolgend und parallel zueinander mehrere weitere Nachfolgerknoten angeordnet sind, wobei insbesondere auf Basis der Kenngröße in dem ersten Knoten bestimmt wird, an welchen der parallel nachfolgenden Nachfolgerknoten das Testobjekt übergeben wird und/oder ob das Testobjekt verworfen wird. Hierdurch ist es auch möglich, mit dem erfindungsgemäßen Verfahren mehrere Arten oder Klassen von Testobjekten zu unterscheiden (z.B. die vier Klassen Auto / LKW / Motorrad und kein Fahrzeug), so dass das erfindungsgemäße Verfahren optional mehrklassenfähig ausgebildet ist. Eine Kaskade ist bevorzugt durch eine rein und/oder ausschließlich serielle Anordnung der Knoten, insbesondere aller Knoten gekennzeichnet.

Eine weitere vorteilhafte Ausgestaltungen ist dadurch gegeben, dass die Klassifikationseinrichtungen als Gesamtklassifikatoren ausgebildet sind, welche einen oder mehrere Einzelklassifikatoren zur Unterklassifikation umfassen. Die Einzelklassifikatoren umfassen bevorzugt jeweils genau ein Merkmal, welches auf das jeweilige Testobjekt angewendet wird. Das Ergebnis der Anwendung des Merkmals auf das Testobjekt und/oder eine daraus abgeleitete Kenngröße ist der Unterklassifikationswert und bildet die Grundlage für die Unterklassifikation. Die verschiedenen Unterklassifikationen und/oder -werte werden zur Bildung des Zwischenklassifikationswertes zusammengefasst. Für die Zusammenfassung ist beispielsweise vorgesehen, dass die Einzelklassifikatoren eine Gewichtung aufweisen, so dass die Unterklassifikationswerte gewichtet in den Zwischenklassifikationswert eingehen. Besonders bevorzugt ist weiterhin, dass die Gesamtklassifikatoren in der hintereinandergeschalteten Reihenfolge eine monoton, insbesondere streng monoton steigende Anzahl von Einzelklassifikatoren aufweisen. Vorzugsweise weisen in der genannten Reihenfolge vorne angeordnete Gesamtklassifikatoren nur wenige Einzelklassifikatoren zur Erstellung einer Zwischenklassifikation auf und in der Reihenfolge weiter hinten angeordnete Gesamtklassifikatoren eine größere Anzahl von Einzelklassifikatoren auf. Nachdem negativ zwischenklassifizierte Testobjekte verworfen werden, werden von den hinteren Gesamtklassifikatoren nur noch eine geringe verbleibende Anzahl der ursprünglichen Testobjekte klassifiziert, so dass insgesamt Rechenzeit eingespart wird.

Es liegt eine bevorzugte Weiterbildung vor, wenn die Einzelklassifikatoren als binäre Klassifikatoren, also Klassifikatoren mit einem binären Wertebereich für die Unterklassifikationswerte, und/oder als insbesondere wahrscheinlichkeitsgestützte und/oder reelwertige Klassifikatoren ausgebildet sind, also Klassifikatoren mit einem mehrstufigen, insbesondere mehr als zweistufigen, und/oder reellen und/oder stufenlosen Wertebereich für die Unterklassifikationswerte. Die wahrscheinlichkeitsgestützten Klassifikatoren erzeugen gegenüber den binären Klassifikatoren eine genauere Aussage über die Unterklassifikation, so dass die Zwischenklassifikation auf einer besseren Grundlage durchgeführt wird.

In einer bevorzugten Ausführungsform ist die erfindungsgemäße Vorrichtung und/oder die Klassifikationseinrichtungen ausgebildet, so dass die Kenngröße auf Zwischenklassifikationswerten einer beliebigen, der ersten und/oder mehrerer Klassifikationseinrichtungen basiert und/oder diese umfasst. Bei dieser Ausführungsform wird nochmals die erfinderische Idee unterstrichen, einer nachfolgenden Klassifikationseinrichtung Informationen über die Zwischenklassifikationswerte einer und/oder mehrerer vorhergehender Klassifikationseinrichtungen oder davon abgeleitete Werte zu übergeben. Indem die aktuelle Klassifikationseinrichtung über die vorhergehenden Zwischenklassifikationswerte und somit über die vorausgehende Zwischenklassifikation informiert ist, kann ein neuer Zwischenklassifikationswert besserer Qualität erzeugt werden. Bevorzugt ist die Kenngröße als Akkumulation der vorhergehenden Zwischenklassifikationswerte oder einer Teilmenge davon ausgebildet.

Bei einer besonders bevorzugten Ausführungsform ist die Kenngröße als eine Wahrscheinlichkeit für das Vorhandensein eines bestimmten Suchobjekts in dem Testobjekt ausgebildet. Diese Ausführungsform wird bevorzugt im Bereich der digitalen Bildverarbeitung und -auswertung eingesetzt.

Das Verfahren zur Bewertung von Testobjekten ist vorzugsweise ausgebildet und/oder geeignet zur Durchführung einer Regression, einer Objektdetektion, einer Objektverfolgung, einer Klassifikation und/oder einer Kombination der Vorgenannten.

Insbesondere bei der Ausgestaltung zur Durchführung der Objektdetektion und/oder - verfolgung ist optional vorgesehen, dass zur Zwischenklassifikation und/oder Unterklassifikation Muster auf ein digitales Bild angewandt werden. Zur Definition des Integralbildes wird auf den bereits zitierten Artikel von Viola und Jones und/oder auf die nachfolgende Beschreibung bevorzugter Ausführungsbeispiele verwiesen. Die Muster sind bevorzugt als zweidimensionale Datenfelder, insbesondere als Haar-Muster realisiert.

Gegenstand der Erfindung ist weiterhin ein Verfahren zur Bewertung von Testobjekten mit den Merkmalen des Anspruchs 10, welches vorzugsweise unter Verwendung einer Vorrichtung nach einem der Ansprüche 1 bis 9 und/oder gemäß der vorhergehenden Beschreibung durchgeführt wird. Schließlich ist ein Computerprogramm mit den Merkmalen des Anspruchs 11 ebenfalls Gegenstand der Erfindung.

Kurze Beschreibung der Zeichnungen

Figur 1 eine schematische Darstellung eines Ausführungsbeispiels der erfindungsgemäßen Vorrichtung in Form eines Flussdiagramms,

Figur 2 eine Abwandlung des ersten Ausführungsbeispiels in gleicher Darstellung,

Figur 3 ein erstes Ausführungsbeispiel eines erfindungsgemäßen Verfahrens, welches beispielsweise auf der Vorrichtung in Figur 1 oder 2 ausgeführt wird,

Figur 4 eine Grafik zur Illustration von Ergebnissen bei dem Verfahren gemäß Figur 3,

Figur 5 ein Grafik zur Illustration der Berechnung von Rechtecksummen mit Hilfe eines Integralbildes,

Figur 6 Ausführungsbeispiele von verschiedenen Mustern,

Figur 7 ein erstes Ausführungsbeispiel einer Vorrichtung zur Objektdetektion und/oder - verfolgung.

Gleiche Bezugszeichen beziehen sich in den Figuren jeweils auf die gleichen oder entsprechenden Teile oder Größen.

Ausführungsform(en) der Erfindung

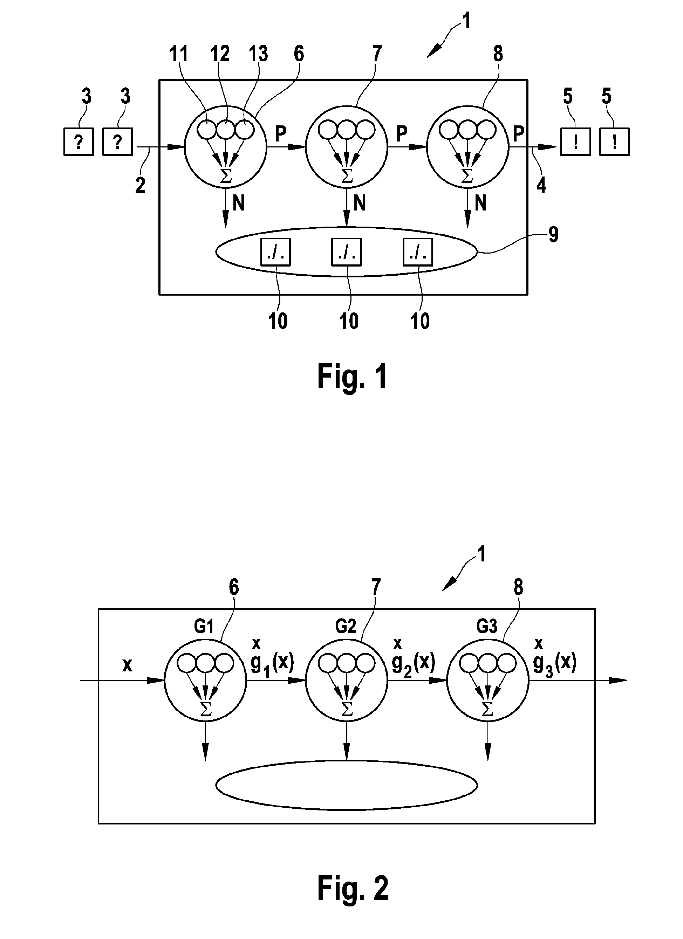

Die Figur 1 zeigt eine schematische Darstellung einer Bewertungsvorrichtung 1 als ein erstes Ausführungsbeispiel der Erfindung. Die Bewertungsvorrichtung 1 weist einen Eingang 2 für Testobjekte 3 sowie einen Ausgang 4 für von der Bewertungsvorrichtung 1 positiv bewertete Testobjekte 5 auf.

Zur Bewertung sind beispielhaft für eine beliebige Anzahl drei Klassifikationseinrichtungen 6, 7 und 8 vorgesehen, die seriell angeordnet sind und von den Testobjekten 3 sequentiell durchlaufen werden. Die Anzahl der Klassifikationseinrichtungen ist nur beispielhaft, bei der Realisierung werden mehr, insbesondere mehr als 4 Klassifikationseinrichtungen implementiert. Jede Klassifikationseinrichtung 6, 7 bzw. 8 ist als Weiche ausgebildet, so dass Testobjekte 3 entweder zu einer nachfolgenden Klassifikationseinrichtung 7, 8 bzw. zu dem Ausgang 4 weitergereicht werden oder verworfen werden, wobei die verworfenen Testobjekte 3 in einen Container 9 als negativ bewertete Testobjekte 10 aussortiert oder datentechnisch gelöscht werden.

Die Entscheidung über das Weiterreichen oder Verwerfen der Testobjekte 3 wird in jeder Klassifikationseinrichtung 6, 7 oder 8 anhand einer Zwischenklassifikation getroffen. Ist diese Zwischenklassifikation positiv "P", so wird das aktuelle Testobjekt weitergereicht, ist diese Zwischenklassifikation negativ "N", so wird das aktuelle Testobjekt verworfen.

Die Zwischenklassifikation wird durch Anwendung von Einzelklassifikatoren 11, 12 und 13 auf das jeweilige Testobjekt 3 zur Bildung von Einzelklassifikationswerten und die Zusammenfassung der Einzelklassifikationswerte zu einem gemeinsamen Zwischenklassifikationswert durchgeführt. Der Zwischenklassifikationswert wird dann gegenüber einer Bedingung, z.B. auf Überschreiten eines Grenzwertes geprüft und - abhängig von dem Ergebnis der Prüfung - wird das aktuelle Testobjekt 3 positiv oder negativ zwischenklassifiziert. Auch hier ist darauf hinzuweisen, dass die Anzahl der Einzelklassifikatoren 11, 12 und 13 nicht auf drei beschränkt ist, sondern größer oder kleiner sein kann und/oder dass die Verknüpfung der Einzelklassifikationswerte nur beispielhaft als Summe in der Figur 1 dargestellt ist.

Die Einzelklassifikatoren können beispielsweise jeweils als binärer Klassifikator (stump learner) ausgebildet sein, der ein i-tes Merkmal $f_i$ auf ein Testobjekt x anwendet, daraus einen Merkmalswert erhält und nachfolgend eine Schwellwertoperation auf dem Merkmalswert durchgeführt:

$$h_i(x) = \begin{cases} 1, & \text{if } p_i f_i(x) < p_i t_i \\ 0, & \text{sonst} \end{cases}$$

mit:

i       Index des Merkmals

$f_i$      i-tes Merkmal

$p_i$      Parität des Klassifikators

$t_i$      Schwellwert des Klassifikators

$h_i(x)$   Zwischenklassifikationswert des i-ten Merkmals für das Testobjekt x

Derartige Klassifikatoren sind bereits aus dem eingangs zitierten Artikel von Viola und Jones bekannt, dessen Inhalt via Referenzierung in die vorliegende Offenbarung übernommen wird. Alternativ können die jeweiligen Einzelklassifikatoren auch als wahrscheinlichkeitsgestützte Klassifikatoren ausgebildet sein, die als Unterklassifikationswert einen Wert aus einem Wertebereich zwischen einer oberen und einer unteren Grenze, also z.B. zwischen 0 und 1, oder aus einem Wertebereich, der mehr als 2 Einzelwerte aufweist, also z. B. aus den Werten (0,1; 0,2; 0,3; 0,4; 0,5; 0,6; 0,7; 0,8; 0,9; 1) o.ä., auswählen.

Die Bewertungsvorrichtung 1 ist somit in Form einer Kaskade, insbesondere einer Entscheidungskaskade realisiert. Diese Kaskade ist dabei so aufgebaut, dass negativ zu bewertende Testobjekte möglichst früh als solche klassifiziert werden. Dies geschieht dadurch, dass alle Testobjekte, die von einer Stufe in der Kaskade, also von einer Klassifikationseinrichtung, negativ zwischenklassifiziert werden, bereits endgültig verworfen werden und nur die positiv zwischenklassifizierten Testobjekte der aktuellen Stufe an die nächst Stufe weitergereicht werden. Da in den meisten Anwendungen der Bewertungsvorrichtung 1, insbesondere bei der Objektdetektion, sehr viele negativ zu bewertende und wenige positiv zu bewertende Testobjekte vorkommen, ermöglicht diese Kaskade eine effektive und somit schnelle Bewertung. Vorzugsweise umfassen die ersten Stufen nur wenige Einzelklassifikatoren, wobei ein Großteil der Testobjekte bereits in den ersten Stufen ausgesondert wird und bei den späteren Stufen, die jeweils eine größere Anzahl von Einzelklassifikatoren als die ersten Stufen umfassen, nur eine geringere Menge an Testobjekten geprüft werden muss.

Bei der Bewertungsvorrichtung 1 wird jeweils zwischen den Klassifikationseinrichtungen 6, 7 und 8 nicht nur das positiv zwischenklassifizierte Testobjekt 3, sondern ergänzend eine Kenngröße zur vorhergehenden Zwischenklassifikation, insbesondere ein oder mehrere Zwischenklassifikationswerte, weitergereicht. Die Klassifikationseinrichtungen 6, 7 und 8 sind dabei ausgebildet, so dass der oder die weitergereichten Zwischenklassifikationswerte bei der Bildung des aktuellen Zwischenklassifikationswertes berücksichtigt wird bzw. werden. Somit vereinfacht sich die Aufgabe der aktuellen Klassifikationseinrichtung, denn diese muss lediglich den bereits vorhandenen Zwischenklassifikationswert der vorhergehenden Klassifikationseinrichtungen weiter verfeinern.

Die Figur 2 zeigt ein zweites Ausführungsbeispiel einer Bewertungsvorrichtung 1, die im wesentlichen analog zu der Bewertungsvorrichtung 1 in Figur 1 ausgebildet ist. Bei dem Beispiel in der Figur 2 erhält die erste Stufe der Kaskade, also die Klassifikationseinrichtung 8, als Eingabe ein zu klassifizierendes Testobjekt x und erzeugt einen Zwischenklassifikationswert $g_1$. Im Fall einer positiven Zwischenklassifikation erhalten alle folgenden Stufen G2 bzw. G3, also allgemein $G_n$, den Zwischenklassifikationswert $g_{n-1}$ der vorhergehenden Stufe G1 bzw. G2, also allgemein $G_{n-1}$, sowie das Testobjekt x und liefern als Ergebnis einen neuen Zwischenklassifikationswert der aus der Summe des Zwischenklassifikationswerte der vorigen Stufe und dem kumulierten Ergebnis der Einzelklassifikatoren der aktuellen Stufe gebildet ist, also allgemein $g_n(x) = g_{n-1}(x) + H_n(x)$, wobei $H_n(x)$ das kumulierte Ergebnis der Einzelklassifikatoren der Stufe n auf das Testobjekt x darstellt. Diese Ausführung unter Verwendung einer einfachen Summe ist - wie bereits erläutert - beispielhaft zu verstehen. Alternativ werden die Zwischenklassifikationswerte der verschiedenen Stufen anders verknüpft, insbesondere kann auch vorgesehen sein, dass ein Vektor weitergegeben wird, der alle früheren Zwischenklassifikationswerte $g_n(x)$ und/oder alle stufenweise kumulierten Einzelergebnisse der Einzelklassifikatoren $H_n(x)$ umfasst.

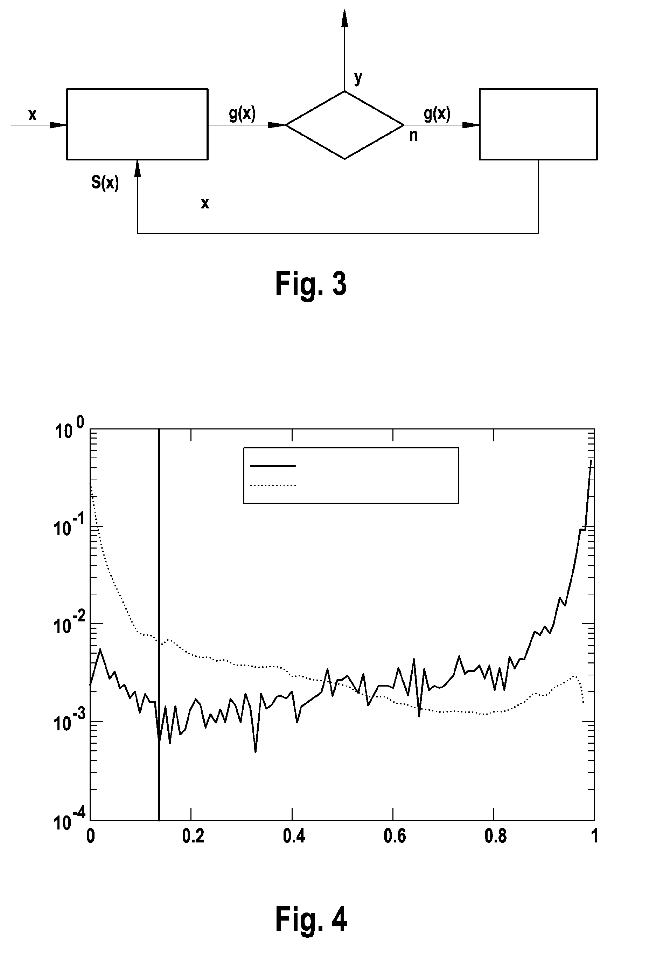

Die Figur 3 illustriert den Ablauf eines Objektdetektionsverfahrens als ein erstes Ausführungsbeispiel des erfindungsgemäßen Verfahrens. Im allgemeinen eignet sich das erfindungsgemäße Verfahren dazu, Verfahren zur Klassifikation, Objektdetektion, Regression, die aus mehreren, hintereinander geschalteten Klassifikatoren oder Detektoren bestehen, zu verbessern. Dies gilt insbesondere, wenn die Klassifikatoren als Ergebnisbaum oder Kaskade angeordnet sind, da dadurch die Anzahl der verwendeten insbesondere schwachen Klassifikatoren verringert werden oder/und eine bessere Güte der Klassifikation, Detektion bzw. Regression erreicht werden. Im Folgenden wird als Anwendungsgebiet jeweils auf die Objektdetektion Bezug genommen, die Ausführungen gelten jedoch in gleicher Weise auch für die Anwendungsgebiete Klassifikation, Regression oder ähnliche Aufgaben.

Die Aufgabe der Objektdetektion besteht darin, in einem Bild ein Suchobjekt zu detektieren. Hierzu wird das Bild in einzelne Segmente unterteilt, und die einzelnen Segmente als Testobjekte x in einen Ereignisbaum oder eine Kaskade, insbesondere eine Kaskade wie in den Figuren 1 oder 2, zur Bewertung gegeben. Somit erhält das Verfahren als Eingabe ein zu klassifizierendes Testobjekt x, also zum Beispiel ein Ausschnitt aus einem Kamerabild. Auf dieses Testobjekt x wird nun die erste ausgewählte Klassifikationseinrichtung G1 mit einem oder mehreren Einzelklassifikatoren angewendet. Anhand des Zwischenklassifikationswertes gl (x) der ersten Klassifikationseinrichtung G1 wird geprüft, ob auf das Testobjekt x weitere Klassifikationseinrichtungen G2 ff. angewendet werden (entspricht einer positiven Zwischenklassifikation) oder ob der Zwischenklassifikationswert gl(x) als Klassifikationsergebnis ausgegeben wird (entspricht einer negativen Zwischenklassifikation). Ein Beispiel für die Prüfbedingung ist die Abfrage, ob gl (x) einen bestimmten Schwellenwert überschreitet. Neben oder statt dem Zwischenklassifikationswerte gl (x) sind auch andere Ausgaben als Klassifikationsergebnis möglich, die mit Hilfe von gl (x) gebildet sind (z.B. eine Schwellenwertbildung auf gl(x) oder ähnliches).

Für den Fall, dass weitere Klassifikationseinrichtungen G2 ff. auf das Testobjekt x angewendet werden, wird die nächstfolgende Klassifikationseinrichtung G2 zum Beispiel anhand des Zwischenklassifikationswertes gl(x) ausgewählt oder ist durch die Struktur des Baumes oder der Kaskade fest vorbestimmt.

In einem nächsten Schritt wird der nachfolgenden Klassifikationseinrichtung G2 das Testobjekt x sowie ein Vektor S(x) ={g1, ...} übergeben, der die Zwischenklassifikationswerte $g_n$ enthält und/oder ein Vektor S(x) ={$H_1$, ...}, der die Ergebnisse $H_n(x)$ der Anwendung der Klassifikationseinrichtungen $G_n$ auf das Testobjekt x enthält und/oder Teilmengen der genannten Elemente. Die nachfolgende Klassifikationseinrichtung G2 ermittelt den Zwischenklassifikationswert $g_2(x)$ auf Basis des Ergebnisses $H_2(x)$ der Anwendung der Einzelklassifikatoren auf das Testobjekt x unter Berücksichtigung der Ausgaben der vorherigen Klassifikationseinrichtungen S(x).

Bei der Bestimmung des aktuellen Zwischenklassifikationswertes werden somit ergänzend zu dem zu klassifizierenden Testobjekt (oder Beispiel) x auch noch die Ausgaben der vorhergehenden Klassifikationseinrichtungen S(x) oder einer Teilmenge davon verwendet. Aus dem Ergebnis der Auswertung H(x) und den vorherigen Ausgaben S(x) wird die Funktion g(x) bestimmt, die in einem weiteren Schritt zur Auswahl des Nachfolgers oder zur Ausgabe des Klassifikationsergebnisses verwendet wird.

Eine vorteilhafte Variante liegt vor, wenn die Funktion $g_n(x)$ rekursiv und/oder als Summe der Ausgabe der letzten Klassifikationseinrichtung $g_{n-1}$ und dem Ergebnis $H_n(x)$ der Auswertung der aktuellen Klassifikationseinrichtung $G_n$ berechnet wird: $g_n(x) = g_{n-1}(x) + H_n(x)$. Dieser Variante liegt die Überlegung zu Grunde, dass insbesondere bei der Objektdetektion jede Klassifikationseinrichtung versucht, die Objektwahrscheinlichkeit für das Vorliegen eines Suchobjekts innerhalb eines Testobjekts zu bestimmen (bzw. eine andere Funktion, mit deren Hilfe die Klassenzugehörigkeit eines Testobjekts bestimmt werden kann). Bei den bislang bekannten Verfahren muss hierbei jede Klassifikationseinrichtung diese Wahrscheinlichkeit von neuen approximieren. Bei der beschriebenen vorteilhaften Variante steht bereits eine Schätzung dieser Objektwahrscheinlichkeit vom letzten Klassifikator in Form des Zwischenklassifikationswertes zur Verfügung. Somit muss die aktuelle Klassifikationseinrichtung diese Schätzung lediglich verfeinern.

Die Figur 4 zeigt ein beispielhaftes Ergebnis einer Testbewertung einer Menge von Beispielobjekten von einer Klassifikationseinrichtung. Die Testmenge besteht aus einer Anzahl von positiven Beispielen, bei denen das Suchobjekt enthalten ist und die somit eine hohe Objektwahrscheinlichkeit bei der Bewertung erhalten müssten und einer Anzahl von negativen Beispielen, die das Suchobjekt nicht enthalten und somit mit einer niedrigen Objektwahrscheinlichkeit zu bewerten wären. Die Objektwahrscheinlichkeit ist auf 1 normiert, wobei der Wert 1 einem sicheren Vorhandensein des Suchobjekts in dem Testobjekt entspricht. Die senkrechte Linie bei einer Objektwahrscheinlichkeit von 0,14 stellt einen Grenzwert dar, wobei Beispielobjekte unterhalb des Grenzwerts verworfen werden und Beispielobjekte oberhalb des Grenzwertes an die nächste Klassifikationseinrichtung weitergereicht werden. Der Graphik ist qualitativ zu entnehmen, dass bereits bei der Bewertung durch die aktuelle Klassifikationseinrichtung eine sehr gute Trennung von positiven und negativen Beispielen vorliegt. Diese vorläufige Bewertung stellt somit eine wertvolle Bewertungsinformation dar, die an die nächste Klassifikationseinrichtung weitergereicht wird.

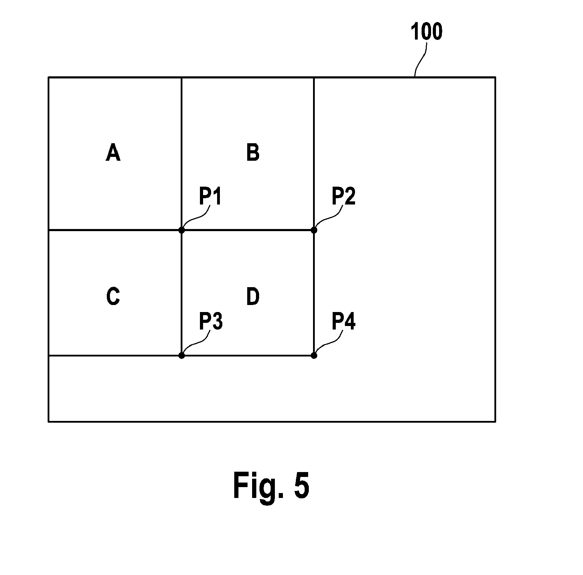

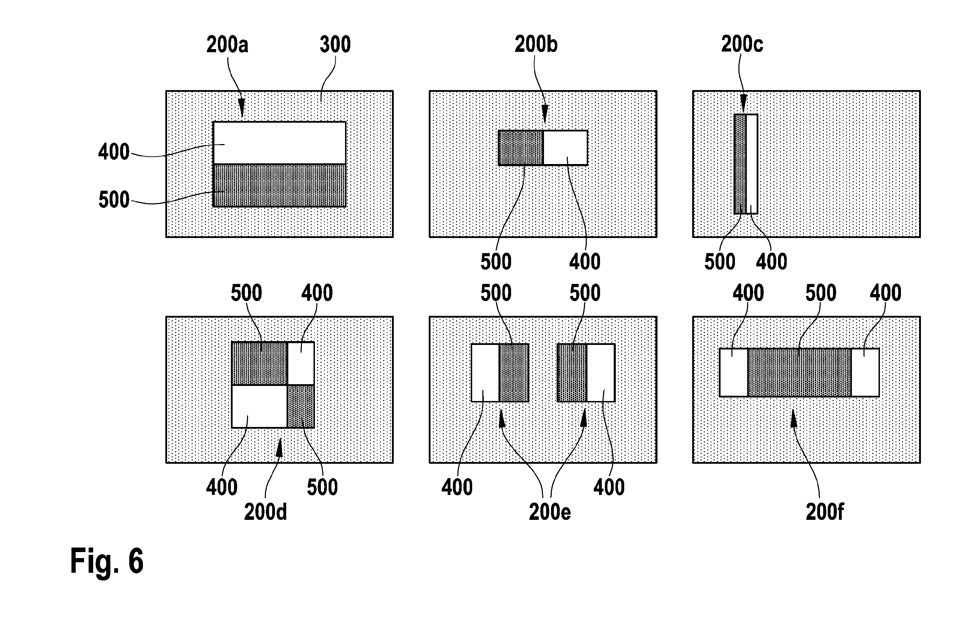

Eine mögliche Umsetzung der Anwendung von Klassifikationseinrichtungen auf ein Bild zum Zweck der Objektdetektion in Form eines Integralbildes 100 wird unter Bezugnahme auf die Figuren 5 und 6 nachfolgend erläutert. Die Figur 5 zeigt das Integralbild 100 eines zu einem Zeitpunkt t aufgenommenen Bildes B mit der Werte- oder Intensitätsverteilung g(x,y,t). Die Werteverteilung des Integralbilds 100 G(x, y, t) ergibt sich aus dem Originalbild g(x,y,t) durch Integration gemäß der Formel

$$G(x, y, t) = \sum_{x'=1,...,x} \sum_{y'=1,...,y} g(x'y', t)$$

Die Verwendung eines Integralbilds 100 zeigt Vorteile, wenn Integrale über bestimmte Bereiche, insbesondere über rechteckige Bereiche, des Originalbildes B berechnet werden sollen, da das Integralbild 1 eine Matrix aus Integralwerten des Bildes B darstellt. Am Punkt P1 der Figur 5 kann beispielsweise das Integral $G_{P1}$ über den Flächenbereich A des Originalbildes abgelesen werden. Am Punkt P4 kann das Integral $G_{P4}$ über die Flächen A, B, C und D entnommen werden. Das Integral über die Fläche D erhält man beispielsweise über eine einfache Berechnung: $D = G_{P4} - G_{P2} - G_{P3} + G_{P1}$. Unabhängig von der Größe der Fläche erfordert die Bestimmung des Integrals über einen rechteckigen, achsenparallelen Bereich also nur die Summation über vier Werte des Integralbildes. Für Details wird auf den eingangs zitierten Artikel von Viola und Jones verwiesen.

Alternativ zu dieser Ausführungsform kann auch ein um einen beliebigen Winkel, insbesondere um 45°, gedrehtes Integralbild verwendet werden, wie es beispielsweise als RSAT (rotated summed area table) in dem Fachaufsatz Lienhart, R; Kuranov, A.; Pisarevsky, V.: Empirical analysis of detection cascades of boosted classifiers for rapid object detection. In: DAGM '03, 25th Pattern Recogonition Symposium, 2003, S. 297 - 304 beschrieben ist. Die Offenbarung dieses Artikels wird via Referenzierung in die vorliegende Anmeldung integriert.

Die Figur 6 zeigt verschiedene Muster 200a, b, c, d, e, f in einem Detektionsfenster 300, die auf als Testobjekte 3 bzw. x verwendete Suchfenster und/oder Objektfenster eines Bildes B angewendet werden, um eine Antwort a zu erhalten. Innerhalb des Detektionsfensters 300, welches jeweils als grauer Bereich dargestellt ist, ist jeweils ein Muster 200a, b, c, d, e, f vorgesehen. Die Muster 200a, b, c, d, e, f weisen jeweils weiße Rechtecke 400 und schwarze Rechtecke 500 auf und unterscheiden sich untereinander durch die Anzahl, Farbe, Verteilung, Abmessungen, Lage und Größe der Rechtecke. Während das Muster 200a nur jeweils ein schwarzes und ein weißes Rechteck 400, 500 zeigt, so weist beispielsweise das Muster 200e jeweils zwei weiße und zwei schwarze Bereiche 400, 500 innerhalb des Detektionsfensters 300 auf. Bei der Anwendung der Muster 200 a, b, c, d, e, f, insbesondere samt Detektionsfenster 300 - nachfolgend auch zusammenfassend als Muster bezeichnet - auf ein Suchfenster und/oder Objektfenster werden Muster und Bild B übereinandergelegt und die Werte (Intensitätswerte) des überlappenden Bereichs des Bildes B wie folgt gewichtet aufsummiert: Bereiche des Bildes B, die mit den grauen Bereichen des Detektionsfensters 300 überlappen, werden nicht berücksichtigt, was einer Wichtung mit dem Faktor 0 entspricht. Bereiche des Bildes B, die mit weißen Bereichen 400 des Musters überlappen, werden mit negativen Vorzeichen aufsummiert, Bereiche des Bildes B, die mit schwarzen Bereichen 500 des Musters überlappen, werden mit positiven Vorzeichen aufsummiert. Die gewichtete Gesamtsumme des überlappenden Bereichs stellt die Antwort a auf das Muster M dar. Die Berechnung der Antwort a, insbesondere der gewichteten Integrale, kann dabei in recheneffizienter Weise über die Verwendung des Integralbilds 100 erfolgen.

In einer vorteilhaften Ausgestaltung umfasst der Wertebereich für das Muster mehr Werte, so dass beispielsweise ganzzahlige Werte zwischen -2 und 2 verwendet werden und fünf verschiedene Wichtungs-Bereiche innerhalb des Musters aufgespannt werden. Auch die Verwendung von skalaren oder gebrochen rationalen Werten als Wertebereich kann angewendet werden und ist beispielsweise von Vorteil, wenn ein Muster wie z.B. Muster 200f in der Summe den Wert 0 ergeben soll.

Unter Verwendung der Muster 200a, b, c, d, e, f oder anderer Muster, wie z.B. die aus der Bildverarbeitung bekannten Haar-Muster oder Abwandlungen davon, werden binäre oder wahrscheinlichkeitsorientierte Einzelklassifikatoren gebildet, die selbst eine Klassifikationseinrichtung darstellen und/oder wobei mehrere derartige Einzelklassifikatoren zu einer Klassifikationseinrichtung zusammengefasst werden. Eine mögliche Bewertungsvorrichtung 1 in Figur 1 oder 2 umfasst üblicherweise 8 bis 40 Stufen, also hintereinander geschaltete Klassifikationseinrichtungen. Bei der Objektdetektion, insbesondere unter Verwendung der Haar-Muster, werden beispielsweise 8 derartiger Klassifikationseinrichtungen verwendet, die hintereinander 2, 2, 5, 6, 8, 14, 13, 10 Einzelklassifikatoren und somit Muster aufweisen.

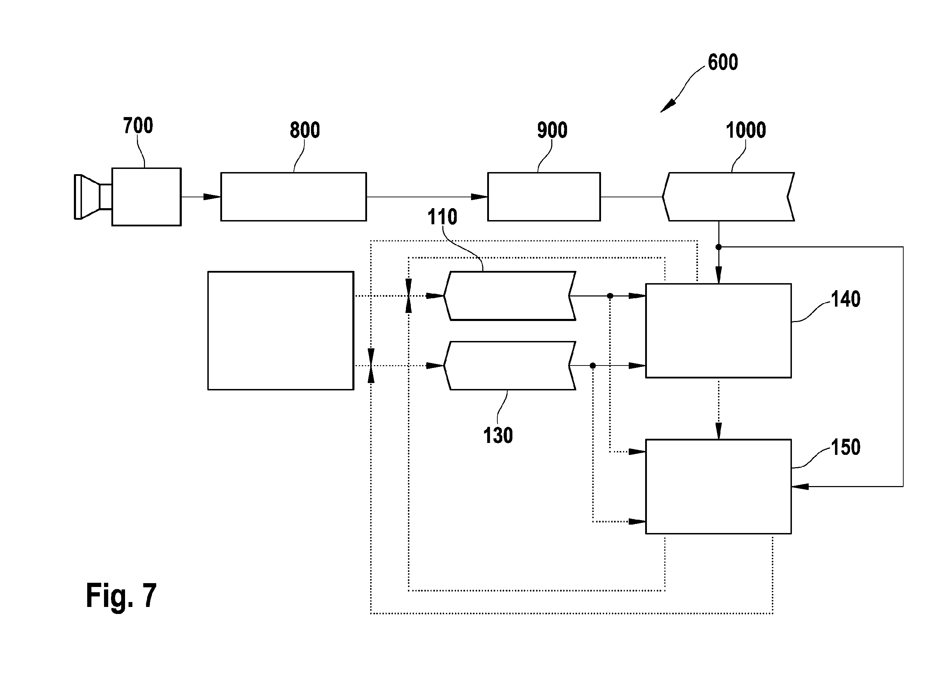

Die Figur 7 zeigt ein erstes Ausführungsbeispiel einer Vorrichtung 600 zur Objektdetektion und/oder -verfolgung in einem schematischen Blockschaltbild. Die Vorrichtung 600 umfasst eine Kamera 700 zur Aufnahme der Bildersequenz, welche beispielsweise als CCD-, CMOS- oder Infrarot-Kamera, die insbesondere sensitiv im nahen Infrarot und/oder fernen Infrarot ist, ausgebildet ist. Der von der Kamera 700 empfangene Bilddatenstrom wird optional in einem Vorverarbeitungsmodul 800 zunächst vorverarbeitet (z.B. Fixed-Pattern Noise Unterdrückung, Bildentrauschung, geometrische Verzeichnungskorrektur, radiometrische Korrektur, lineare oder nicht-lineare Filterung, Beleuchtungskorrektur). In einem nachgeschalteten Integrationsmodul 900 werden die Bilder der Bildersequenz in Integralbilder umgerechnet und in einen Integralbildspeicher 1000 abgelegt. Die Vorverarbeitung und die Bildung des Integralbilds arbeiten im allgemeinen auf dem Bilddatenstrom (benötigen also nicht zwingenderweise die Speicherung des vollen Bildes) und sind sehr gut in Hardware darstellbar, so dass Vorverarbeitungsmodul 800 und/oder Integrationsmodul 900 vorzugsweise als FPGA (Field Programmable Gate Array) ausgebildet sind. Die Berechnung des Integralbilds benötigt nämlich nur Integer-Arithmetik und kann mit geringem Aufwand auf dem FPGA durchgeführt werden und in einem als SDRAM ausgebildeten Integralbildspeicher 1000 abgelegt werden. Ein Objekt-Detektor 140 und/oder ein Objekt-Verfolger 150, die nachfolgend noch erläutert werden, sind dagegen vorzugsweise als programmierbarer Prozessor, z.B. einem Power-PC-Prozessor (MGT 5200), ausgebildet. Der Prozessor kann auf das in dem SDRAM abgelegte Integralbild zugreifen und Antworten auf die auf das Bild angewendeten Muster in sehr effizienter Weise bestimmen. Die Erfindung kann beispielsweise auf einem Steuergerät für Fahrerassistenzsysteme heutiger Architektur (z.B. Bosch IVS Video-Steuergerät) umgesetzt werden.

Ferner ist in der Vorrichtung 600 ein Musterspeicher 110 vorgesehen, der zur Speicherung von Mustern in der Art der Muster in Figur 6 dient. Vorzugsweise werden die Muster nicht als Bilder gespeichert, sondern speicherplatzsparend über die Koordinaten der Eckpunkte der Rechtecke und die zu verwendenden Vorzeichen und Vorfaktoren, wie sie auf das Intergralbild 100 (Fig. 5) angewendet werden.

Ein Strukturspeicher 130 ist zur Speicherung der Struktur und der Belegung einer in der Vorrichtung 600, insbesondere in dem Objektdetektor 140 und/oder dem Objektverfolger 150 verwendeten Bewertungsstruktur vorgesehen. Die Struktur ist beispielsweise als Kaskade mit fester Abfolge oder als Baumstruktur mit Verzweigungen ausgebildet. Die Belegung legt fest, welche Muster aus dem Musterspeicher 110 an welche Position innerhalb der Bewertungsstruktur gesetzt werden.

Der Objektdetektor 140 ist mit dem Integralbildspeicher 1000, dem Musterspeicher 110 und dem Strukturspeicher 130 derart verschaltet, dass er auf diese zugreifen kann. Im Betrieb erhält der Objektdetektor 140 aus dem Integralbildspeicher 1000 ein zu analysierendes Bild oder einen Teilbereich davon. Dieses Bild oder der Teilbereich wird mit Hilfe einer Bewertungsvorrichtung z.B. einer Bewertungsvorrichtung gemäß Figur 1 oder 2, auf das Vorhandensein von Merkmalen oder Suchobjekten analysiert. Dabei wird das Testobjekt, also das Bild oder der Teilbereich davon, innerhalb der Bewertungsstruktur von einer Bewertungsstufe zur nächsten zusammen mit einer Kenngröße auf Basis einer vorhergehenden Zwischenklassifizierung des Testobjektes weitergereicht. Die Bewertungsvorrichtung erhält ihre Struktur (oder Architektur), insbesondere die Kaskadenstruktur aus dem Strukturspeicher 130 und die Muster für die Einzelklassifikatoren, insbesondere für die Einzelklassifikatoren 11, 12, 13 (Fig. 2), aus dem Musterspeicher 110. Wird ein Testobjekt, also ein Bild oder ein Teilbereich davon, von der Bewertungsvorrichtung als positiv bewertet, ist ein Suchobjekt gefunden und dessen Position in dem Testobjekt bekannt.

Optional wird die Position und/oder die Merkmalswerte des gefundenen Suchobjekts an einen Objektverfolger 150 weitergegeben, der in den nachfolgenden Bildern einer Bildsequenz das einmal detektierte Suchobjekt wiederfindet und verfolgt. Als Ergebnis liefert der Objekt-Verfolger 150 die aktuelle Objektposition und/oder die Wahrscheinlichkeitsverteilung für die Objektposition in einem oder allen der nachfolgenden Bilder. Der Objektverfolger 150 kann die Objektverfolgung auf Basis einer beliebigen Technik durchführen, optional verwendet der Objektverfolger eine weitere Bewertungsvorrichtung 1 gemäß Figur 1 oder 2 zur Verfolgung des Suchobjekts und ist mit dem Musterspeicher 110 und dem Strukturspeicher 130 sowie dem Integralbildspeicher 1000 datentechnisch verbunden. Als weitere Variante ist auch möglich, dass nur ein Objektverfolger mit dem erfindungsgemäßen Verfahren verwendet wird, insbesondere ein Objektverfolger, der Eingaben von einem beliebigen (Detektions-)Modul erhält, welches nicht notwendigerweise mit dem erfindungsgemäßen Verfahren arbeitet.

Bei einer Weiterbildung des Ausführungsbeispiels werden von Objektdetektor 140 und Objektverfolger 150 eine gemeinsame Bewertungsvorrichtung und/oder die gleichen Merkmale oder Merkmalswerte und/oder die Ergebnisse der Anwendung der Merkmale auf ein Bild oder einen Teilbereich davon gemeinsam und somit rechenzeitsparend verwendet.

Die Initialisierung und/oder Belegung des Musterspeichers 110 und des Strukturspeichers 130 erfolgt im einfachsten Fall manuell, insbesondere durch Benutzereingabe. Alternativ oder ergänzend dazu erfolgt die Initialisierung und/oder Belegung durch ein Trainingsmodul 160, welches auf Basis von Trainingsbeispielen die Muster, Struktur und Belegung auswählt. Stellvertretend für verschiedene Trainingsverfahren wird auf die Boosting-Verfahren, insbesondere Adaboost, RealBoost oder Gentleboost verwiesen.

Weiterhin ist optional vorgesehen, dass die Auswahl der Merkmale, der Struktur und der Belegung im Betrieb durch den Objektdetektor 140 und/oder den Objektverfolger 150 initialisiert und/oder aktualisiert wird, wie dies in der Figur 7 durch die Rückführungen angedeutet ist. Insbesondere kann der Objektdetektor 140 und/oder Objekt-Verfolger 150 die Muster liefern, anpassen und/oder aus einem vorgegebenen Satz von Mustern auswählen.

Mögliche Vorteile der Erfindung liegen also darin, dass sie eine Abwandlung von beliebigen Verfahren zur Klassifikation / Regression erlaubt, die in einer baumähnlichen Struktur aufgebaut sind, wodurch sich die Ergebnisse deutlich verbessern oder die Ergebnisse mit geringerem Aufwand (weniger Rechenzeit) erreichen lassen. Das erfindungsgemäße Verfahren kann es ferner ermöglichen, bei Vorrichtungen wie in dem eingangs zitierten Artikel die Anzahl der benötigten schwachen Klassifikatoren in einer Kaskade deutlich zu reduzieren, wobei die erreichte Detektionsrate und Falsch-Positiv-Rate unverändert bleibt. Somit kann sich entweder ein deutlicher Geschwindigkeitsvorteil ergeben, wenn weniger schwache Klassifikatoren verwendet werden, oder eine bessere Detektionsleistung des Klassifikators, wenn die Anzahl der schwachen Klassifikatoren nicht reduziert wird. Das erfindungsgemäße Verfahren macht sich bei bestimmten Ausführungsformen die Tatsache zu nutzen, dass bei der Objektverfolgung oder - detektion die Ausgabe einer Stufe eines Baumes oder einer Kaskade die Objektwahrscheinlichkeit P(y/x) approximiert. Nach dem Stand der Technik wird aus diesem Wert durch Schwellwertbildung bestimmt, ob das Beispiel verworfen wird oder an die nächste Stufe weitergereicht wird (bei einem Baum wird vorzugsweise damit bestimmt, welcher Nachfolgerknoten ausgewertet wird). Allerdings wird dann nur das Beispiel weitergereicht, die bereits ermittelte Objektwahrscheinlichkeit wird nicht weitergegeben und muss in der nächsten Stufe (im Nachfolgerknoten) nochmals von neuem approximiert werden. Beim erfindungsgemäßen Verfahren wird dagegen die akkumulierte Ausgabe der vorherigen Stufen an die aktuelle Stufe weitergegeben. Somit vereinfacht sich die Aufgabe der aktuellen Stufe: sie muss lediglich die bereits vorhandene Schätzung der Objektwahrscheinlichkeit aus den vorhergehenden Stufen verfeinern.

**Patentansprüche**

1. Vorrichtung (1) zur Bewertung von Testobjekten (3, x) mit

   einer Mehrzahl von Klassifikationseinrichtungen (6, 7, 8) zur Zwischenklassifikation der Testobjekte (3, x),

wobei die Klassifikationseinrichtungen (6, 7, 8) programmtechnisch und/oder schaltungstechnisch ausgebildet sind, so dass die Klassifikationseinrichtungen (6, 7, 8) hintereinander geschaltet sind und/oder schaltbar sind und nur positiv zwischenklassifizierte Testobjekte (3, x) von einer ersten Klassifikationseinrichtung (6, 7) zu einer zweiten Klassifikationseinrichtung (7, 8) weitergebbar sind und/oder weitergegeben werden,

**dadurch gekennzeichnet, dass**

ein positiv zwischenklassifiziertes Testobjekt (3, x) zusammen mit einer Kenngröße auf Basis der Zwischenklassifikation von der ersten Klassifikationseinrichtung (6, 7) an die zweite Klassifikationseinrichtung (7, 8) übergeben wird.

2. Vorrichtung nach Anspruch 1, **dadurch gekennzeichnet, dass** die Klassifikationseinrichtungen (6, 7, 8) in einer Baumstruktur und/oder einer Kasakade angeordnet sind.

3. Vorrichtung nach einem der vorhergehenden Ansprüche, **dadurch gekennzeichnet, dass** die Klassifikationseinrichtungen als Gesamtklassifikatoren (6, 7, 8) ausgebildet sind, welche einen oder mehrere Einzelklassifikatoren (11, 12, 13) zur Unterklassifikation umfassen.

4. Vorrichtung nach Anspruch 3, **dadurch gekennzeichnet, dass** die Einzelklassifikatoren als binärer Klassifikatoren mit einem binären Wertebereich und/oder als wahrscheinlichkeitsgestützte Klassifikatoren mit einem gestuften und/oder reellwertigen Wertebereich ausgebildet sind.

5. Vorrichtung nach einem der vorhergehenden Ansprüche, **dadurch gekennzeichnet, dass** die Kenngröße auf Zwischenklassifikationswerten einer, der ersten und/oder mehrerer Klassifikationseinrichtungen (6, 7, 8) basiert und/oder diese umfasst.

6. Vorrichtung nach Anspruch 5, **dadurch gekennzeichnet, dass** die Kenngröße die akkumulierten Zwischenklassifikationswerten von früheren Klassifikationseinrichtungen oder einer Teilmenge davon umfasst.

7. Vorrichtung nach einem der vorhergehenden Ansprüche, **dadurch gekennzeichnet, dass** die Kenngröße als eine Wahrscheinlichkeit für ein Suchobjekt in dem Testobjekt ausgebildet ist.

8. Vorrichtung nach einem der vorhergehenden Ansprüche, **dadurch gekennzeichnet, dass** die Vorrichtung zur Durchführung einer Regression, Objektdetektion, Objektverfolgung und/oder Klassifikation ausgebildet ist.

9. Vorrichtung zur Durchführung der Objektdetektion und/oder -verfolgung nach Anspruch 8, **dadurch gekennzeichnet, dass** zur Zwischenklassifikation und/oder Unterklassifikation Muster auf ein Integralbild (100) angewandt werden.

10. Verfahren zur Bewertung von Testobjekten, wobei eine erste Klassifikationseinrichtung (6, 7, 8) auf ein Testobjekt (3, x) angewendet wird, wobei die Klassifikationseinrichtung (6, 7) eine Zwischenklassifikation und/oder einen Zwischenklassifikationswert und eine Kenngröße auf Basis des Zwischenklassifikationswertes und/oder der Zwischenklassifikation erzeugt und wobei das Testobjekt (3, x) bei positiver Zwischenklassifikation zusammen mit der Kenngröße an eine zweite Klassifikationseinrichtung (7, 8) übergeben wird.

11. Computerprogramm mit Programmcode-Mitteln, um alle Schritte des Anspruchs 10 durchzuführen, wenn das Programm auf einem Computer und/oder einer Vorrichtung von jedem Beliebigen der Ansprüche 1 bis 9 ausgeführt wird.

**Fig. 1**

**Fig. 2**

Fig. 3

Fig. 4

Fig. 5

Fig. 6

EP 1 835 445 A2

Fig. 7

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Nicht-Patentliteratur**

- Rapid object detection using a boosted cascade of simple features. **VON PAUL VIOLA ; MICHAEL JONES.** In Proc. IEEE Conf. Computer Vision Pattern Reognition. 2001

- **LIENHART, R ; KURANOV, A ; PISAREVSKY, V.** Empirical analysis of detection cascades of boosted classifiers for rapid object detection. *DAGM '03, 25th Pattern Recogonition Symposium,* 2003, 297-304